# EUROPÄISCHE PATENTSCHRIFT

(11) **EP 3 720 757 B1**
(45) Veröffentlichungstag und Bekanntmachung des Hinweises auf die Patenterteilung: **07.09.2022**
(21) Anmeldenummer: 18826967.4
(22) Anmeldetag: 03.12.2018
(51) Int. Cl.: F16H 57/021, B62D 5/04

(54) **KOMPAKTES DUAL-PINION-LENKGETRIEBE**
COMPACT DUAL PINION STEERING TRANSMISSION
BOÎTIER DE DIRECTION COMPACT À DOUBLE PIGNON

(30) Priorität: 05.12.2017 DE 102017128815
(43) Veröffentlichungstag der Anmeldung: 14.10.2020
(73) Patentinhaber: thyssenkrupp Presta AG, 9492 Eschen (LI); thyssenkrupp AG, 45143 Essen (DE)
(72) Erfinder: RATH, Krisztian, 1039 Budapest (HU)
(74) Vertreter: thyssenkrupp Intellectual Property GmbH
(86) Internationale Anmeldenummer: PCT/EP2018/083360
(87) Internationale Veröffentlichungsnummer: WO 2019/110513

(56) Entgegenhaltungen:
- EP-A1- 2 511 156
- DE-A1-102013 003 902
- JP-A- 2006 082 610
- US-A1- 2016 264 171

## Beschreibung

Die vorliegende Erfindung betrifft ein Lenkgetriebe für ein Kraftfahrzeug mit den Merkmalen des Oberbegriffs des Anspruchs 1.

Elektromechanische Lenkgetriebe mit Servounterstützung für Kraftfahrzeuge sind in verschiedenen Bauformen bekannt. Eine Bauform ist das so genannte Doppelritzel-Getriebe (dual pinion), bei dem in dem Lenkgetriebegehäuse eine Zahnstange gelagert ist, die über ein erstes Lenkritzel mit einer Lenkwelle und einem Lenkrad des Kraftfahrzeugs in Verbindung steht. Ein zweites Lenkritzel, das in Längsrichtung der Zahnstange beabstandet von dem ersten Lenkritzel angeordnet ist, steht mit einem Elektromotor in Verbindung, der als Aktuator eine Lenkunterstützung bewirkt. Die beiden Lenkritzel kämmen getriebetechnisch jeweils mit einem auf der Zahnstange angebrachten Verzahnungsbereich. Der Vorteil dieser Doppelritzel-Lenkgetriebe wird darin gesehen, dass konstruktiv die Anordnung des elektrischen Servomotors unabhängig von der Lenkwelle und dem ersten Lenkritzel erfolgen kann und dass deshalb eine größere konstruktive Freiheit bei der Gestaltung des Lenkgetriebes besteht. Dies ist insbesondere bei beengten Einbauverhältnissen in Kraftfahrzeugen von Vorteil, da der Getriebezug der Lenkwelle zwischen dem Lenkrad und dem ersten Lenkritzel dann kleiner gebaut werden kann, da in diesem Bereich der elektrische Servomotor nicht angeordnet sein muss.

Ein solches Lenkgetriebe ist beispielsweise aus der Offenlegungsschrift DE 102007004218 A1 bekannt. Dort ist das zweite Lenkritzel über ein Schneckenradgetriebe von dem Elektromotor angetrieben. Der Elektromotor treibt dabei mit seiner Motorwelle eine Schneckenwelle an, die mit dem Schneckenrad kämmt. Das Schneckenrad ist wiederum an der Ritzelwelle des zweiten Lenkritzels angeordnet.

Im Stand der Technik ist es üblich, das Getriebegehäuse des Lenkgetriebes als Gussteil auszubilden. Das Schneckengetriebe, das zum Antrieb des zweiten Lenkritzels dient, hat im Stand der Technik üblicherweise ebenfalls ein eigenes Getriebegehäuse, das bei der Montage mit dem Getriebegehäuse des Lenkgetriebes verbaut wird. Die Lagerung des zweiten Lenkritzels erfolgt dabei üblicherweise an dem freien Ende des Lenkritzels, das der Verzahnung benachbart ist, in einem Nadellager, während im Bereich des Schneckenrades das Lenkritzel in einem Kugellager gelagert wird. Das Kugellager kann zwischen dem Getriebegehäuse und dem Gehäuse des Schneckengetriebes angeordnet sein. Ein zweites Wälzlager kann auf der anderen Seite des Schneckenrades am zweiten freien Ende des Lenkritzels vorgesehen sein.

Die Lagerung eines Lenkritzels einer Lenkwelle in einem konventionellen Zahnstangenlenkgetriebe kann derart ausgebildet sein, dass das Kugellager als Festlager in dem Getriebegehäuse mit einem Sprengring fixiert ist. Dies ist aus dem Patent US 9,174,665 B2 bekannt. Die Fixierung des Lageraußenrings im Lenkgetriebegehäuse erfolgt hier mit einem solchen Sprengring. Bei der Ritzelwelle handelt es sich um die Ritzelwelle einer Kraftfahrzeuglenkung, die über eine Lenkwelle mit einem Lenkrad in Verbindung steht. Es ist auch bekannt, bei einem Schneckengetriebe die Getriebewelle beidseits des Schneckenrades in Kugellagern zu lagern, wobei ein Kugellager als Festlager und das andere Kugellager als Loslager ausgebildet ist. In der CN 203391853 U ist beschrieben, dass das Festlager in einem solchen Fall mit einem Sprengring im Getriebegehäuse befestigt ist. Die angetriebene Welle des Schneckengetriebes ist hier beidseits des Schneckenrades gelagert. Damit kann die Lagerung die auf die Getriebewelle wirkenden Kippmomente auffangen.

Ein gleichartig aufgebautes gattungsgemäßes Lenkgetriebe ist in der US 2016/264171 A1 erwähnt, welches ebenfalls die genannten Nachteile hat. Darüber hinaus sind diverse Bauformen von einfachen Lenkgetrieben bekannt, die im Gegensatz zu den hier gattungsgemäßen Lenkgetrieben nur ein Lenkritzel aufweisen, wie beispielsweise in der EP 2 511 156 A1. Auch dabei ist die Montage der Lagerung relativ aufwendig, was für die eine Lagerung noch akzeptabel ist, nicht jedoch für die gattungsgemäßen zwei Lagerungen.

Die bekannten technischen Lösungen mit separaten Getriebegehäusen für das Schneckengetriebe und einer Lagerung des Lenkritzels beidseits des Schneckenrades sind auf Grund der Vielzahl der Bauelemente und der zahlreichen Verbindungsstellen im Zusammenbau mit Toleranzen behaftet, die in der Summe unerwünscht groß sind und die gegebenenfalls aufwändig kompensiert werden müssen. Außerdem ist der gesamte Aufbau eines solchen Lenkgetriebes voluminös und weist ein relativ hohes Gewicht auf.

Es ist deshalb Aufgabe der vorliegenden Erfindung, ein gattungsgemäßes Lenkgetriebe so weiter zu entwickeln, dass die Toleranzen, die Abmessungen und das Gesamtgewicht verringert werden können. Außerdem soll die Anzahl der erforderlichen Bauteile für ein solches Lenkgetriebe verringert werden. Diese Aufgabe wird von einem Lenkgetriebe mit den Merkmalen des Anspruchs 1 gelöst.

Weil bei einem Lenkgetriebe mit einem Getriebegehäuse, in dem eine Zahnstange in einer Längsrichtung verschieblich gelagert ist, und umfassend ein erstes Lenkritzel und ein zweites Lenkritzel, die jeweils drehbar in dem Getriebegehäuse gelagert sind und einen Verzahnungsbereich aufweisen, der in Eingriff mit wenigstens einer auf der Zahnstange vorgesehenen Verzahnung stehen, wobei das erste Lenkritzel mit einer ein Lenkrad tragenden Lenkwelle in Wirkverbindung steht und das zweite Lenkritzel über ein Schneckengetriebe mit einem Elektromotor in Wirkverbindung steht, und das zweite Lenkritzel ein erstes freies Ende und ein zweites freies Ende aufweist, wobei das erste freie Ende in einem ersten Wälzlager in dem Getriebegehäuse um eine Drehachse drehbar gelagert ist und das zweite freie Ende ein Schneckenrad des Getriebes trägt, außerdem das zweite Lenkritzel zwischen dem Verzahnungsbereich und dem Schneckenrad in einem zweiten Wälzlager gelagert ist, wobei das zweite Wälzlager einen Aussenring umfasst, und dass der Außenring des zweiten Wälzlagers mittels eines Sicherungsrings in dem Getriebegehäuse in Richtung der Drehachse festgelegt ist, verkürzt sich die axiale Bauhöhe in diesem Bereich. Es wird möglich, das Getriebegehäuse einstückig mit dem Gehäuseteil zu fertigen, der die zweite Ritzelwelle aufnimmt. Die Teileanzahl und das Gewicht werden dadurch verringert. Das Getriebegehäuse ist besonders bevorzugt als Gussteil ausgebildet. Durch die einstückige Form des Getriebegehäsuses entfallen Verbindungs-und Dichtungselemente. Zudem wird die Montage des Gehäuses erleichtert.

Eine besonders einfache Fixierung des zweiten Wälzlagers wird dadurch ermöglicht, dass erfindungsgemäß der Sicherungsring ein Sprengring ist, der Unterbrechung oder einem Spalt versehenen Ringteil umfasst und zwei beidseits von der Unterbrechung radial überstehende Schenkel hat, wobei die Schenkel radial nach außen abstehen und der Vorspannung des Sicherungsrings dienen. Bevorzugt ist das Schneckenrad mit einem Presssitz mit dem zweiten freien Ende des zweiten Lenkritzels verbunden, wodurch die Baugruppe weiter vereinfacht wird.

Es ist denkbar und möglich, dass zur besseren Fixierung mehr als ein Sicherungsring, insbesondere zwei Sicherungsringe, vorgesehen sind. Besonders geringe Toleranzen sind erreichbar, wenn das erste Wälzlager ein Loslager und das zweite Wälzlager ein Festlager ist. Erfindungsgemäß ist das zweite Wälzlager in einem einstückig angeformten Bereich des Getriebegehäuses angeordnet. Eine kompakte Bauform ergibt sich insbesondere, wenn das zweite freie Ende des zweiten Lenkritzels in Axialrichtung nicht über das Schneckenrad hinaussteht.

Das Gewicht des Lenkgetriebes wird verringert, wenn das Getriebegehäuse im Bereich des Schneckenrades mit einem Deckel verschlossen ist. Da der Deckel ein nicht tragendes Element des Getriebes ist, kann mit Vorteil der Deckel ein Kunststoffdeckel sein.

Nachfolgend wird ein Ausführungsbeispiel der vorliegenden Erfindung anhand der Zeichnung näher beschrieben. Es zeigen:
- Figur 1:: eine schematische perspektivische Darstellung eines Doppelritzel-Lenkgetriebes in einer Kraftfahrzeuglenkung;
- Figur 2:: eine perspektivische Darstellung eines Doppelritzel-Lenkgetriebes;
- Figur 3:: eine perspektivische Darstellung des Servoantriebs eines Lenkgetriebes nach Figur 2 mit abgenommenem Gehäuse;
- Figur 4:: eine Explosionsdarstellung des Getriebezuges des Servoantriebs aus Figur 3;
- Figur 5:: den Getriebezug aus Figur 4 in zusammengebautem Zustand in einem Längsschnitt;
- Figur 6:: eine vergrößerte Darstellung des Schnittes aus Figur 5; sowie
- Figur 7:: eine weiter vergrößerte Darstellung der Figur 6 in einem Ausschnitt.

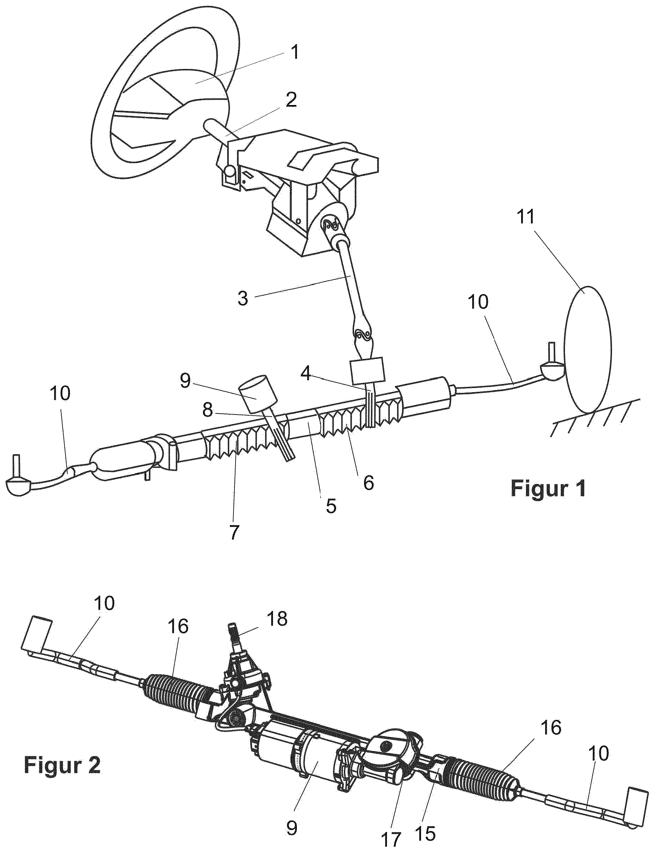

In der Figur 1 ist in einer schematischen Darstellung eine elektromechanische Servolenkung eines Kraftfahrzeugs in der Bauform eines Doppelritzel-Lenkgetriebes dargestellt. Die Lenkung weist ein Lenkrad 1 auf, das mit einer oberen Lenkwelle 2 und einer unteren Lenkwelle 3 verbunden ist. Die untere Lenkwelle 3 steht wiederum mit einem ersten Lenkritzel 4 in drehfester Verbindung, so dass ein Drehmoment von dem Lenkrad 1 auf das erste Lenkritzel 4 übertragen werden kann. Das erste Lenkritzel 4 steht mit einer Zahnstange 5 in Eingriff, die ein erstes Zahnsegment 6 aufweist. Ein zweites Zahnsegment 7 ist in axialem Abstand neben dem ersten Zahnsegment 6 angeordnet. Dieses steht in einem Verzahnungseingriff mit einer zweiten Ritzelwelle 8, die von einem nicht näher dargestellten Servoantrieb 9 antreibbar ist.

Bei einer Lenkbewegung leitet ein Fahrer durch Drehung des Lenkrades 1 ein Drehmoment in die Lenkwelle 2,3 ein, das über das erste Lenkritzel 4 eine Verschiebung der Zahnstange 5 in Axialrichtung bewirkt und in bekannter Weise über Spurstangen 10 eine Verschwenkung der gelenkten Räder 11 bewirkt. Bei Bedarf unterstützt der Servoantrieb 9 durch Einleiten eines Drehmoments in das zweite Lenkritzel 8 den Fahrer bei seiner Lenkbewegung. Durch den Verzahnungseingriff zwischen dem zweiten Lenkritzel 8 und dem zweiten Zahnsegment 7 wird eine unterstützende Axialkraft in der Zahnstange 5 erzeugt.

Die Figur 2 zeigt ein Doppelritzel-Lenkgetriebe in einer realistischeren, perspektivischen Darstellung. Gleiche oder funktionsgleiche Bauteile tragen hier und im Folgenden gleiche Bezugsziffern.

Die nicht sichtbare Zahnstange ist in einem Getriebegehäuse 15 gelagert und an beiden Zahnstangenenden von Faltenbälgen 16 gegenüber äußeren Einflüssen geschützt. Das Getriebegehäuse 15 weist für den Servoantrieb 9 einen Gehäusebereich 17 auf, in dem das zweite Lenkritzel 8 gelagert ist. Der Gehäusebereich 17 ist so ausgebildet, dass der Servoantrieb 9 über ein Schneckengetriebe mit der zweiten Ritzelwelle 8 in Verbindung stehen kann. In einem axialen Abstand von dem Gehäusebereich 17 ist das erste Lenkritzel 4 gelagert, das mit einem Anschlussbereich 18 aus dem Getriebegehäuse 15 heraus geführt ist. Der Anschlussbereich 18 dient zur Verbindung mit der unteren Lenkwelle 3 aus Figur 1.

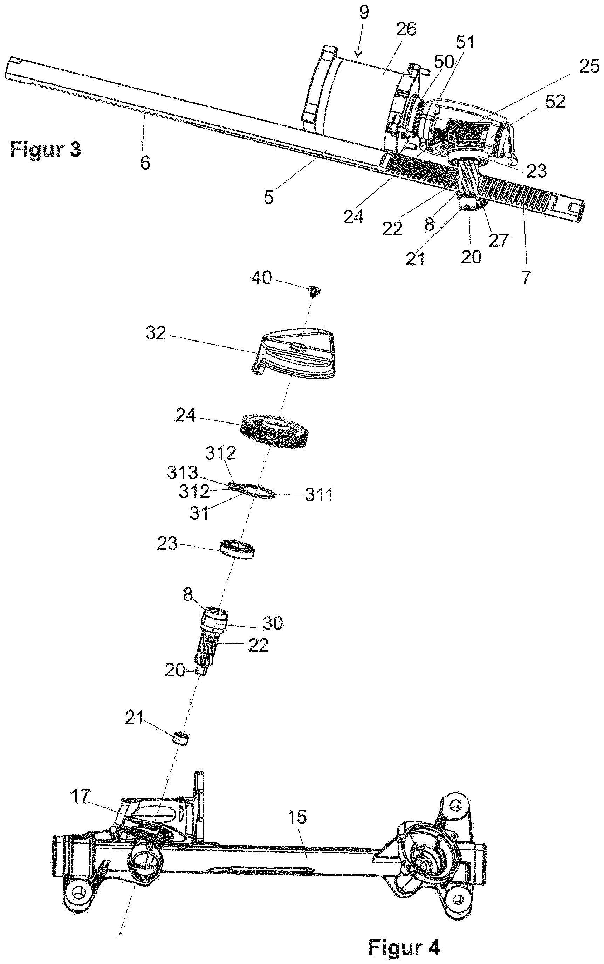

Die Figur 3 zeigt den Servoantrieb 9 mit dem dazugehörigen Getriebezug zum Antrieb der Zahnstange 5 in einer perspektivischen Darstellung mit abgenommenem Getriebegehäuse. Das zweite Lenkritzel 8 weist an einem freien Ende 20 ein Wälzlager 21 auf. An das freie Ende 20 schließt sich ein Verzahnungsbereich 22 des zweiten Lenkritzels 8 an. Der Verzahnungsbereich 22 kämmt mit dem zweiten Verzahnungsabschnitt 7 der Zahnstange 5. Ein zweites Wälzlager 23 ist an der anderen Seite des Verzahnungsbereichs 22 auf der zweiten Ritzelwelle 8 angeordnet. Das zweite Wälzlager 23 liegt zwischen dem Verzahnungsbereich 22 und einem Schneckenrad 24, welches an einem in dieser Darstellung nicht sichtbaren zweiten freien Ende des Lenkritzels 8 befestigt ist. Das Schneckenrad 24 wiederum kämmt mit einer Schneckenwelle 25, die mit der Motorwelle eines elektrischen Servomotors 26 antriebsmäßig in Verbindung steht. Die Schneckenwelle 25 ist über eine motornahe Lageranordnung 51 mit einem ersten Wälzlager und eine motorferne Lageranordnung 52 mit einem zweiten Wälzlager im Gehäusebereich 17 des einstückigen Getriebegehäuses 15 gelagert. Eine Kupplung 50 ist mit der Schneckenwelle 25 angrenzend zur motornahen Lageranordnung 51 drehfest gekoppelt. Die motorferne Lageranordnung 52 ist als Loslager ausgebildet und lässt geringfügige Axialbewegungen und Änderungen der Drehachse der Schneckenwelle 25 gegenüber dem Gehäusebereich 17 zu. Das Loslager 52 weist einen Außenring auf, welcher auf zwei radial gegenüberliegenden Seiten Vorsprünge aufweist. Der Außenring umgibt einen nicht dargestellten Innenring. Der Innenring weist entsprechend den Vorsprüngen des Außenrings vorspringende Elastomernasen auf, um eine Wärmeausdehnung und auftretende Geräusche besser kompensieren zu können. Das zweite Wälzlager 23 ist als Festlager des zweiten Lenkritzels 8 ausgebildet, während das erste Wälzlager 21 als Loslager ausgebildet ist. Im Bereich des Verzahnungseingriffs zwischen dem Verzahnungsbereich 22 des zweiten Lenkritzels 8 und dem Verzahnungsabschnitt 7 der Zahnstange 5 ist noch gegenüber dem zweiten Lenkritzel 8 eine Druckstückanordnung 27 vorgesehen, die die Zahnstange 5 in nahezu spielfreiem Eingriff mit dem zweiten Lenkritzel 8 hält.

Die Figur 4 zeigt in einer Explosionsdarstellung einige Getriebeelemente aus Figur 3 in ihrer relativen Anordnung, die hier besser verdeutlicht werden kann. Von dem Getriebegehäuse 15 aus gesehen ist die dargestellte Baugruppe zunächst mit dem ersten Wälzlager 21 versehen, das auf dem ersten freien Ende 20 des Lenkritzels 8 angeordnet wird und das im Betrieb das freie Ende 20 in dem Getriebegehäuse 15 drehbar und spielfrei lagert. Der Verzahnungsbereich 22 schließt in Axialrichtung an den Lagersitz des freien Endes 20 an. In Axialrichtung weiter, auf der anderen Seite des Verzahnungsbereichs 22, ist ein Sitz 30 für das zweite Wälzlager 23 an dem zweiten Lenkritzel 8 angeordnet. Ein Sprengring 31 dient in zusammengebautem Zustand des Lenkgetriebes zur axialen Sicherung des zweiten Wälzlagers 23 in dem Getriebegehäuse 15. Der Sprengring 31 besteht aus einem an einer Stelle mit einer Unterbrechung 313 oder einem Spalt versehenen Ringteil 311 und hat zwei beidseits von der Unterbrechung radial überstehende Schenkel 312. Die Schenkel stehen radial nach außen ab und dienen der Vorspannung des Sicherungsrings. Das Schneckenrad 24 wird ebenfalls auf das zweite Lenkritzel 8 aufgesetzt, und zwar auf dem freien Ende, das auch den Lagersitz 30 trägt. Schließlich ist eine Abdeckhaube 32 vorgesehen, die diesen Bereich des Lenkgetriebes mittels eines Stopfens 40 nach außen verschließt.

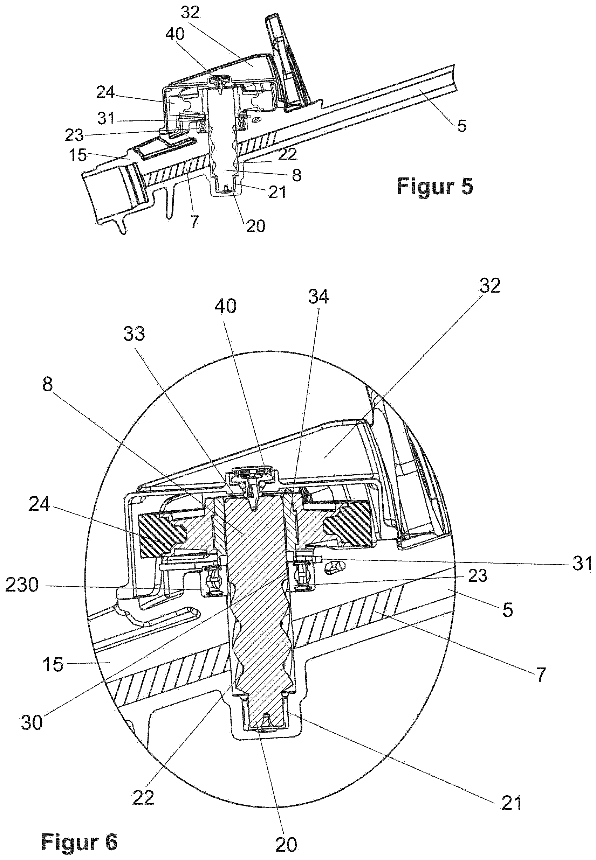

In zusammengebautem Zustand ist die Anordnung aus Figur 4 in der Figur 5 in einem Längsschnitt dargestellt.

Derselbe Bereich ist in der Figur 6 weiter vergrößert dargestellt. Hier ist erkennbar, dass das zweite Wälzlager 30 mit dem Sprengring 31 in Axialrichtung der Anordnung in dem Getriebegehäuse 15 fixiert ist. Das Wälzlager 23 und der Sprengring 31 sind hierbei zwischen dem Verzahnungsbereich 22 des zweiten Lenkritzels 8 und dem Schneckenrad 24 angeordnet. Das Schneckenrad 24 schließt an seiner Oberseite im Wesentlichen bündig mit einem zweiten freien Ende 33 des zweiten Lenkritzels 8 ab. Es ist in diesem Ausführungsbeispiel über eine mittige Hülse 34 mit dem Lenkritzel 8 verpresst. Dabei kann die Hülse 34 aus Metall gefertigt sein, während der radial außen liegende Teil des Schneckenrades 24 aus einem Kunststoffmaterial im Spritzgussverfahren gefertigt sein kann. Das zweite Lenkritzel 8 ist also nur an zwei Punkten in dem ersten Wälzlager 21 im zweiten Wälzlager 23 gelagert. An der dem Verzahnungsbereich 22 abgewandten Seite ist das Schneckenrad 24 nicht mit einem Lager versehen.

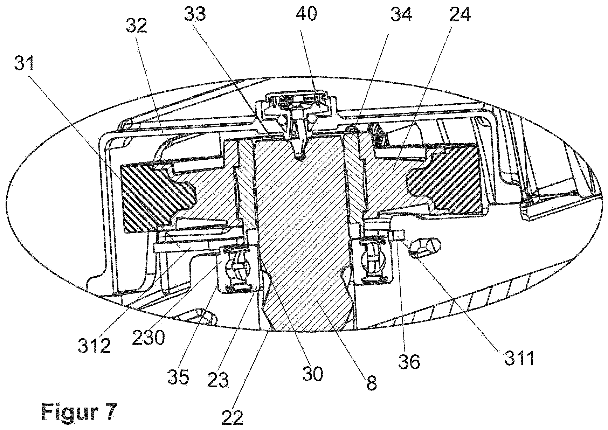

Der Bereich des zweiten Wälzlagers 23 aus Figur 6 ist in Figur 7 nochmals vergrößert dargestellt. In dieser Darstellung ist erkennbar, dass das zweite Wälzlager 23 in einem entsprechenden Lagersitz 35 des Getriebegehäuses 5 sitzt und dort mit Hilfe des Sprengrings 31 axial fest fixiert ist. Der Sprengring 31 ist zu diesem Zweck in einer dafür vorgesehenen Nut 36 des Getriebegehäuses 5 angeordnet. In Axialrichtung anschließend ist das zweite Lenkritzel 8 mit dem freien Ende 33 versehen, welches die Hülse 34 zur Befestigung des Schneckenrades 24 trägt. Jenseits des freien Endes 33 ist die dargestellte Getriebeanordung von dem Deckel 32 über den Stopfen 40 nach außen abgeschlossen, der das Getriebegehäuse 5 an dieser Stelle verschließt.

Die beschriebene Montage des zweiten Wälzlagers 23 als Festlager in dem Getriebegehäuse 5 ermöglicht es, das Getriebegehäuse 5 in diesem Bereich einstückig zu fertigen, so dass das Schneckengetriebe umfassend das Schneckenrad 24 und die Schneckenwelle 25 sowie andere Komponenten nicht in einem eigens dafür zu fertigenden zweiten Getriebegehäuse angeordnet werden müssen. Die dadurch entfallende Fügestelle führt zu einer Verkürzung der Toleranzkette zwischen den Getriebeelementen und dadurch zu verringerten Toleranzen bei ebenfalls verringertem Fertigungsaufwand. Außerdem ist ersichtlich, dass die soweit beschriebene Anordnung in Axialrichtung des zweiten Lenkritzels 8 besonders kompakt ausgebildet werden kann, da die Lagerung an der dem Verzahnungsbereich 22 abgewandten Seite des Schneckenrades 24 entfallen kann. Hierdurch werden Gewicht und Bauraum eingespart. Eine weitere Gewichtsersparnis ergibt sich dadurch, dass der Deckel 32 und gegebenenfalls auch das Schneckenrad 24 aus Kunststoff gefertigt werden können. Der Deckel 32 hat insbesondere keine tragende oder stabilisierende Funktion.

### Bezugszeichen

- 1.: Lenkrad
- 2.: Lenkwelle
- 3.: Lenkwelle
- 4.: Lenkritzel
- 5.: Zahnstange
- 6.: Zahnsegment
- 7.: Zahnsegment
- 8.: Ritzelwelle
- 9.: Servoantrieb
- 10.: Spurstangen
- 11.: Räder
- 15.: Getriebegehäuse
- 16.: Faltenbälge
- 17.: Gehäusebereich
- 18.: Anschlussbereich
- 20.: Freies Ende
- 21.: Wälzlager
- 22.: Verzahnungsbereich
- 23.: Wälzlager
- 24.: Schneckenrad
- 27.: Druckstückanordnung
- 30.: Lagersitz
- 31.: Sprengring
- 311: Ringteil312 Schenkel
- 313: Unterbrechung
- 32.: Deckel
- 33.: Freies Ende
- 34.: Hülse
- 35.: Lagersitz
- 36.: Nut
- 40: Stopfen
- 50: Kupplung
- 51: 1. Lager
- 52: 2. Lager

## Patentansprüche

1. Lenkgetriebe mit einem Getriebegehäuse(15), in dem eine Zahnstange (5) in einer Längsrichtung verschieblich gelagert ist, und umfassend ein erstes Lenkritzel (4) und ein zweites Lenkritzel (8), die jeweils drehbar in dem Getriebegehäuse (15) gelagert sind und einen Verzahnungsbereich (22) aufweisen, der in Eingriff mit wenigstens einer auf der Zahnstange (5) vorgesehenen Verzahnung (6, 7) steht, wobei das erste Lenkritzel (4) mit einer ein Lenkrad (1) tragenden Lenkwelle (2, 3) in Wirkverbindung steht und das zweite Lenkritzel (8) über ein Schneckengetriebe (24, 25) mit einem Elektromotor (26) in Wirkverbindung steht, und das zweite Lenkritzel (8) ein erstes freies Ende (20) und ein zweites freies Ende (33) aufweist, wobei das erste freie Ende (20) in einem ersten Wälzlager (21) in dem Getriebegehäuse (15) um eine Drehachse drehbar gelagert ist und das zweite freie Ende (33) ein Schneckenrad (24) des Getriebes trägt, wobei das zweite Lenkritzel (8) zwischen dem Verzahnungsbereich (22) und dem Schneckenrad (24) in einem zweiten Wälzlager (23) gelagert ist, wobei das zweite Wälzlager (23) einen Außenring (230) umfasst, und dass der Außenring (230) des zweiten Wälzlagers (23) mittels eines Sicherungsrings (31) in dem Getriebegehäuse (15) in Richtung der Drehachse festgelegt ist, **dadurch gekennzeichnet, dass** der Sicherungsring (31) ein Sprengring ist, der einen an einer Stelle mit einer Unterbrechung oder einem Spalt versehenen Ringteil (311) hat und zwei beidseits von der Unterbrechung radial überstehende Schenkel (312), die radial nach außen abstehen und der Vorspannung des Sicherungsrings (31) dienen, wobei das zweite Wälzlager (23) in einem einstückig angeformten Bereich des Getriebegehäuses (15) angeordnet ist.

2. Lenkgetriebe nach Anspruch 1, **dadurch gekennzeichnet, dass** das Schneckenrad (24) mit einem Presssitz mit dem zweiten freien Ende (33) des zweiten Lenkritzels (8) verbunden ist.

3. Lenkgetriebe nach einem der vorhergehenden Ansprüche, **dadurch gekennzeichnet, dass** das erste Wälzlager (21) ein Loslager und das zweite Wälzlager (23) ein Festlager ist.

4. Lenkgetriebe nach einem der vorhergehenden Ansprüche, **dadurch gekennzeichnet, dass** das zweite freie Ende (33) des zweiten Lenkritzels (8) in Axialrichtung nicht über das Schneckenrad (24) hinaussteht.

5. Lenkgetriebe nach einem der vorhergehenden Ansprüche, **dadurch gekennzeichnet, dass** das Getriebegehäuse (15) im Bereich des Schneckenrades (24) mit einem Deckel (32) verschlossen ist.

6. Lenkgetriebe nach einem der vorhergehenden Ansprüche, **dadurch gekennzeichnet, dass** der Deckel (32) ein Kunststoffdeckel ist.

## Claims

1. Steering gear with a gear housing (15), in which a rack (5) is mounted such that it can be displaced in a longitudinal direction, and comprising a first steering pinion (4) and a second steering pinion (8) which are mounted in each case rotatably in the gear housing (15) and have a toothing region (22) which is in engagement with at least one toothing system (6, 7) which is provided on the rack (5), the first steering pinion (4) being operatively connected to a steering shaft (2, 3) which supports a steering wheel (1), and the second steering pinion (8) being operatively connected via a worm gear mechanism (24, 25) to an electric motor (26), and the second steering pinion (8) having a first free end (20) and a second free end (33), the first free end (20) being mounted in a first anti-friction bearing (21) in the gear housing (15) such that it can be rotated about a rotational axis, and the second free end (33) supporting a worm gear (24) of the gear, the second steering pinion (8) being mounted in a second anti-friction bearing (23) between the toothing region (22) and the worm gear (24), the second anti-friction bearing (23) comprising an outer ring (230), and the outer ring (230) of the second anti-friction bearing (23) being fixed by means of a securing ring (31) in the gear housing (15) in the direction of the rotational axis, **characterized in that** the securing ring (31) is a circlip which has a ring part (311), provided with an interruption or a gap at one point, and two limbs (312) which protrude radially on both sides from the interruption, project radially outwards and serve to prestress the securing ring (31), the second anti-friction bearing (23) being arranged in an integrally formed region of the gear housing (15).

2. Steering gear according to Claim 1, **characterized in that** the worm gear (24) is connected by way of a press fit to the second free end (33) of the second steering pinion (8).

3. Steering gear according to either of the preceding claims, **characterized in that** the first anti-friction bearing (21) is a floating bearing and the second anti-friction bearing (23) is a locating bearing.

4. Steering gear according to one of the preceding claims, **characterized in that** the second free end (33) of the second steering pinion (8) does not project beyond the worm gear (24) in the axial direction.

5. Steering gear according to one of the preceding claims, **characterized in that** the gear housing (15) is closed by way of a cover (32) in the region of the worm gear (24).

6. Steering gear according to one of the preceding claims, **characterized in that** the cover (32) is a plastic cover.

## Revendications

1. Mécanisme de direction, comprenant un carter d'engrenage (15) dans lequel une crémaillère (5) est montée mobile dans une direction longitudinale, et comprenant un premier pignon de direction (4) et un deuxième pignon de direction (8) qui sont respectivement montés en rotation dans le carter d'engrenage (15) et présentent une zone de denture (22) qui est en prise avec au moins une denture (6, 7) prévue sur la crémaillère (5), dans lequel le premier pignon de direction (4) est en relation fonctionnelle avec un arbre de direction (2, 3) portant un volant (1), et le deuxième pignon de direction (8) est en relation fonctionnelle avec un moteur électrique (26) par l'intermédiaire d'un engrenage à vis sans fin (24, 25), et le deuxième pignon de direction (8) présente une première extrémité libre (20) et une deuxième extrémité libre (33), la première extrémité libre (20) étant montée en rotation autour d'un axe de rotation dans un premier palier à roulement (21) dans le carter d'engrenage (15), et la deuxième extrémité libre (33) portant une roue hélicoïdale (24) du mécanisme, le deuxième pignon de direction (8) étant monté entre la zone de denture (22) et la roue hélicoïdale (24) dans un deuxième palier à roulement (23), le deuxième palier à roulement (23) comprenant une bague extérieure (230), et la bague extérieure (230) du deuxième palier à roulement (23) étant immobilisée dans le carter d'engrenage (15) en direction de l'axe de rotation au moyen d'une bague de blocage (31),
**caractérisé en ce que** la bague de blocage (31) est un circlips qui présente une partie annulaire (311) pourvue à un endroit d'une discontinuité ou d'un intervalle et deux branches (312) dépassant radialement des deux côtés de la discontinuité et qui font saillie radialement vers l'extérieur et servent à précontraindre la bague de blocage (31), le deuxième palier à roulement (23) étant disposé dans une zone rapportée d'un seul tenant du carter d'engrenage (15).

2. Mécanisme de direction selon la revendication 1, **caractérisé en ce que** la roue hélicoïdale (24) est reliée par ajustage serré à la deuxième extrémité libre (33) du deuxième pignon de direction (8).

3. Mécanisme de direction selon l'une quelconque des revendications précédentes, **caractérisé en ce que** le premier palier à roulement (21) est un palier libre et le deuxième palier à roulement (23) est un palier fixe.

4. Mécanisme de direction selon l'une quelconque des revendications précédentes, **caractérisé en ce que** la deuxième extrémité libre (33) du deuxième pignon de direction (8) ne fait pas saillie au-delà de la roue hélicoïdale (24) dans la direction axiale.

5. Mécanisme de direction selon l'une quelconque des revendications précédentes, **caractérisé en ce que** le carter d'engrenage (15) est fermé par un couvercle (32) au niveau de la roue hélicoïdale (24).

6. Mécanisme de direction selon l'une quelconque des revendications précédentes, **caractérisé en ce que** le couvercle (32) est un couvercle en matière plastique.
